# EUROPEAN PATENT SPECIFICATION

(11) **EP 2 129 721 B1**
(45) Date of publication and mention of the grant of the patent: **07.09.2016**
(21) Application number: 08734824.9
(22) Date of filing: 28.03.2008
(51) Int. Cl.: C08L 23/04, C08L 23/06, C08L 23/08, C08F 10/02, C08F 210/16, C08F 297/08, C08F 2/00, B29C 51/00, B60K 15/03

(54) **POLYETHYLENE MOLDING COMPOSITION FOR PRODUCING HOLLOW CONTAINERS BY THERMOFORMING AND FUEL CONTAINERS PRODUCED THEREWITH**
POLYETHYLENFORMZUSAMMENSETZUNG ZUR HERSTELLUNG HOHLER BEHÄLTER MITTELS THERMOFORMING UND DAMIT HERGESTELLTE KRAFTSTOFFBEHÄLTER
COMPOSITION DE MOULAGE DE POLYÉTHYLÈNE SERVANT À FABRIQUER DES RÉCIPIENTS CREUX PAR THERMOFORMAGE, ET RÉSERVOIRS À CARBURANT FABRIQUÉS AVEC CETTE COMPOSITION

(30) Priority: 03.04.2007 DE 102007016348; 31.05.2007 US 932564 P
(43) Date of publication of application: 09.12.2009
(73) Proprietor: Basell Polyolefine GmbH, 50389 Wesseling (DE)
(72) Inventor: BERTHOLD, Joachim, 83224 Grassau (DE); FÖTTINGER, Klaus, 85290 Geisenfeld (DE); MEIER, Gerhardus, 60320 Frankfurt am Main (DE)
(74) Representative: Gaverini, Gaetano Luigi Attilio
(86) International application number: PCT/EP2008/002446
(87) International publication number: WO 2008/119504

(56) References cited:
- WO-A-2004/058878
- US-B1- 6 713 561

## Description

The present invention relates to a polyethylene molding composition which has a multimodal molar mass distribution and is particularly well suited for the thermoforming of fuel containers for automobiles which have a capacity of in the range from 20 to 200 l. The invention also relates to a process for producing this molding composition by polymerization in the presence of a catalytic system comprising a Ziegler catalyst and a cocatalyst in a multistage reaction sequence consisting of successive liquid-phase polymerizations. The invention further relates to fuel containers produced from the molding composition by thermoforming.

Polyethylene is widely used for producing moldings of all types for which a material having a particularly high mechanical strength, high corrosion resistance and absolutely reliable long-term stability is required. In addition, polyethylene has the particular advantage that it also has good chemical resistance and a low intrinsic weight.

EP-A-603,935 has already described a molding composition based on polyethylene which has a bimodal molar mass distribution and is suitable for producing moldings having good mechanical properties.

US patent 6,713,561 discloses a polyethylene composition with an improved ESCR/stiffness relation and an improved swelling rate.

A material having an even broader molar mass distribution is described in US patent 5,338,589 and is produced using a highly active catalyst which is known from WO 91/18934 and in the preparation of which the magnesium alkoxide is used as a gel-like suspension. It has surprisingly been found that the use of this material in moldings, in particular in pipes, makes possible a simultaneous improvement in the properties stiffness and creep tendency on the one hand and stress cracking resistance and toughness on the other hand which usually run counter to one another in partially crystalline thermoplastics.

However, the known bimodal products have the disadvantage of a relatively low melt strength which makes processing of such molding compositions by extrusion considerably more difficult. Tearing of the moldings in the molten state occurs every now and again during solidification and therefore leads to undesirable instabilities in the extrusion process. Furthermore, a nonuniformity of the wall thicknesses is observed, particularly in the production of thick-walled moldings, caused by flowing down of the melt before solidification from the upper regions into lower regions. In addition, there is, particularly in thermoforming, a particular degree of swelling of the molding composition which has to be reached because the processing machines are set for this.

Finally, fuel containers themselves have to have a balanced ratio of stiffness to impact toughness in order to be satisfactory for their intended use.

It was thus an object of the present invention to develop a polyethylene molding composition by means of which, compared to all known materials, even better processing to produce fuel containers by the thermoforming process can be achieved. In particular, the molding composition should make a stable thermoforming process over a long of period of time possible as a result of its particularly high melt strength and allow optimal wall thickness control due to its specifically set degree of swelling. In addition, the molding composition has to have a sufficiently high stiffness and a good impact toughness in the cooled state after processing in order for a fuel container made therefrom to survive the average use life of a motor vehicle without damage.

This is object is achieved by a molding composition of the generic type mentioned at the outset which comprises from 40 to 50% by weight of a first, low molecular weight ethylene homopolymer A, from 35 to 45% by weight of a second, high molecular weight copolymer B of ethylene and another olefin having from 4 to 8 carbon atoms and from 10 to 25% by weight of a third, ultrahigh molecular weight ethylene copolymer C, with all percentages being based on the total weight of the molding compositions.

The invention further provides a process for producing this molding composition in a cascaded suspension polymerization and fuel containers having a capacity in the range from 20 to 200 l which are made of this molding composition and have excellent mechanical strength properties.

The polyethylene molding composition of the invention has a density at a temperature of 23°C in the range from 0.948 to 0.953 g/cm³ and a broad trimodal molar mass distribution. The second, high molecular weight copolymer B comprises small proportions of further olefin monomer units having from 4 to 8 carbon atoms, namely from 0.4 to 0.8% by weight. Examples of such comonomers are 1-butene, 1-pentene, 1-hexene, 1-octene and 4-methyl-1-pentene. The third, ultrahigh molecular weight ethylene copolymer C likewise comprises one or more of the abovementioned comonomers in an amount in the range from 1.5 to 3.0% by weight.

The molding composition of the invention also has a melt flow index in accordance with ISO 1133, expressed as MFR_{190/21.6}, in the range from 4.5 to 6 g/10 min, preferably form 4.8 to 5.6 g/10 min, and a viscosity number VNₜₒₜ, measured in accordance with ISO 1628-3 in decalin at a temperature of 135°C, in the range from 400 to 480 ml/g, in particular from 420 to 460 ml/g.

The trimodality can, as a measure of the positions of the centers of gravity of the three individual molar mass distributions, be described by means of the viscosity numbers VN in accordance with ISO 1628-3 of the polymers formed in the successive polymerization steps. Here, the following bandwidths of the polymers formed in the individual reaction steps have to be noted:
The viscosity number VN₁ measured on the polymer after the first polymerization step is identical to the viscosity number VN_{A} of the first, low molecular weight polyethylene A and is, according to the invention, in the range from 160 to 200 ml/g.

The viscosity number VN₂ measured on the polymer after the second polymerization step does not correspond to VN_{B} of the higher molecular weight polyethylene B formed in the second polymerization step, which can be determined only arithmetically in this production sequence, but instead represents the viscosity number VN₂ of the mixture of polymer A plus polymer B. According to the invention, VN₂ is in the range from 250 to 300 ml/g.

The viscosity number VN₃ measured on the polymer after the third polymerization step does not correspond to VNc of the third, ultrahigh molecular weight copolymer C formed in the third polymerization step, which can likewise be determined only arithmetically, but instead represents the viscosity number VN₃ of the mixture of polymer A, polymer B plus polymer C. According to the invention, VN₃ is in the range from 400 to 480 ml/g, in particular from 420 to 460 ml/g.

The polyethylene is obtained by polymerization of the monomers in suspension at temperatures in the range from 60 to 90°C, a pressure in the range from 2 to 10 bar and in presence of a highly active and hydrogen-sensitive Ziegler catalyst which is composed of a transition metal compound and an organoaluminum compound. The polymerization is carried out in three successive steps, with the molar mass being regulated in each step by means of added hydrogen.

The polyethylene molding composition of the invention can comprise further additives in addition to the polyethylene. Such additives are, for example, heat stabilizers, antioxidants, UV absorbers, light stabilizers, metal deactivators, peroxide-destroying compounds, basic costabilizers in amounts of from 0 to 10% by weight, preferably from 0 to 5% by weight, and also fillers, reinforcing materials, plasticizers, lubricants, emulsifiers, pigments, optical brighteners, flame retardants, antistatics, blowing agents or combinations of these in total amounts of from 0 to 50% by weight, based on the total weight of the mixture.

The molding composition of the invention is particularly suitable for producing fuel containers by the thermoforming process. Here, the polyethylene molding composition is firstly plasticized in an extruder at temperatures in the range from 200 to 250°C and then extruded through a die to produce a blank which is then three-dimensionally shaped in the hot state and subsequently cooled.

The molding composition of the invention can be particularly readily processed to produce fuel containers by the thermoforming process because it has a degree of swelling in the range from 170 to 210%. As a result, the wall thickness of the fuel containers can be set optimally in the range from 0.8 to 15 mm. The fuel containers produced in this way have a particularly high mechanical strength because the molding composition of the invention has a notched impact toughness (DIN) in the range from 37 to 47 kJ/m² at -30°C and a stress cracking resistance (FNCT = Fill Notch Creep Test) in the range from 30 to 60 h.

The notched impact toughness (DIN) is measured in accordance with DIN EN ISO 179 at 23 and at -30°C. The dimensions of the specimen are 10 x 4 x 80 mm and a V-notch having an angle of 45°, a depth of 2 mm and a radius at the bottom of the notch of 0.25 mm is cut into the specimen.

The stress cracking resistance of the molding composition of the invention is determined by an in-house measurement method and reported in h. This laboratory method is described by M. Fleißner in Kunststoffe 77 (1987), p. 45 ff, and corresponds to ISO/CD 16770 which has now come into force. The publication demonstrates that there is a relationship between the determination of slow crack growth in the creep test on circumferentially notched test bars and the brittle branch of the low-term internal pressure test in accordance with ISO 1167. A reduction in the time to failure is achieved by shortening the cracking initiation time by means of the notch (1.6 mm/razor blade) in ethylene glycol as stress-cracking-promoting medium at a temperature of 80°C and a tensile stress of 4 MPa. The specimens are produced by sawing three test specimens having dimensions of 10 x 10 x 90 mm from a 10 mm thick press plate. The test specimens are notched circumferentially in the middle by means of a razor blade in a notching apparatus constructed in-house for this purpose (see figure 5 in the publication). The notch depth is 1.6 mm.

### Example 1

The polymerization of ethylene was carried out in a continuous process in three reactors connected in series. A Ziegler catalyst which had been produced by the method of WO 91/18934, example 2, and has the operations number 2.2 in the WO was fed into the first reactor in an amount of 5.2 mmol/h; in addition, sufficient suspension medium (hexane), ethylene and hydrogen were fed in. The amount of ethylene (= 45 kg/h) and the amount of hydrogen (= 17.6 g/h) were set so that a percentage of 44% by volume of ethylene and a percentage of 44% by volume of hydrogen were measured in the gas space of the first reactor; the remainder was a mixture of inert gas (nitrogen), ethane and vaporized suspension medium.

The polymerization in the first reactor was carried out at a temperature of 70°C.

The suspension from the first reactor was then transferred into a second reactor in which the percentage of hydrogen in the gas space was reduced to 10% by volume and into which an amount of 38 kg/h of ethylene together with an amount of 150 g/h of 1-butene were introduced. The reduction in the amount of hydrogen was achieved by means of intermediate depressurization of H₂. 74% by volume of ethylene, 10% by volume of hydrogen and 0.60% by volume of 1-butene were measured in the gas space of the second reactor; the remainder was a mixture of inert gas (nitrogen), ethane and vaporized suspension medium.

The polymerization in the second reactor was carried out at a temperature of 85°C.

The suspension from the second reactor was transferred to the third reactor via a further intermediate depressurization of H₂, by means of which the amount of hydrogen in the gas space in the third reactor was set to 0.0% by volume.

An amount of 17 kg/h of ethylene together with an amount of 300 g/h 1-butene were introduced into the third reactor. A percentage of ethylene of 79% by volume, a percentage of hydrogen of 0.0% by volume and a percentage of 1-butene of 1.9% by volume were measured in the gas space of the third reactor, the remainder was a mixture of inert gas (nitrogen), ethane and vaporized suspension medium.

The polymerization in the third reactor was carried out at a temperature of 82°C.

The long-term activity of the polymerization catalyst required for the above-described, cascaded mode of operation was ensured by means of a specially developed Ziegler catalyst having the composition indicated in the abovementioned WO publication. A measure of the suitability of this catalyst is its extremely high hydrogen sensitivity and its high activity which remains constant over a long period of from 1 to 8 hours.

The suspension medium is separated off from the polymer suspension leaving the third reactor and the powder is dried and passed to pelletization.

The multimodal polyethylene molding composition produced in example 1 has the following viscosity numbers and proportions w_{A}, w_{B} and w_{C} of polymer A, B and C reported in Table 1 below.

**Table 1A - Values measured on the powder**

| **Example** | **(1)** |
|---|---|
| W_{A} [% by weight] | 45 |
| W_{B} [% by weight] | 38 |
| W_{C} [% by weight] | 17 |
| VN₁ [ml/g] | 181 |
| VN₂ [ml/g] | 278 |
| VNₜₒₜ [ml/g] | 440 |
| MI_{21.6} (powder) | 5.2 g/10 min |

**Table 1B - Values measured on the pellets**

| | |
|---|---|
| VN (pellets) [ml/g] | 420 |
| MFR_{21.6} | 4.2 g/10 min |
| MFR₅ | 0.21 g/10 min |
| FRR_{21.6/5} | 20.4 |
| SD | 202% |
| FNCT (4 MPa/80°C) | 50 h |
| NIT_{DIN} -30°C | 41 kJ/m² |

The abbreviations for the physical properties in Table 1 have the following meanings:
- MFR_{21.6} (= Melt Flow Rate) determined in accordance with ISO 1133 at a temperature of 190°C and under a weight of 21.6 kg.
- MFR₅ (= Melt Flow Rate) determined in accordance with ISO 1133 at a temperature of 190°C and under a weight of 5 kg.
- SD (= degree of swelling) in [%] measured at a temperature of 190°C and a shear rate of 1440 1/s in a 2/2 circular orifice die having a conical intake (angle = 15°) on a high-pressure capillary rheometer.
- FNCT = Stress cracking resistance (full notch creep test) measured by the in-house measurement method of M. Fleißner in [h] under a load of 4 MPa and at a temperature of 80°C.
- NIT_{DIN} = Notched impact toughness, measured in accordance with DIN EN ISO 179 in [kJ/m²] at temperatures of 23 and -30°C.

### Example 2 (comparative example)

A three-stage polymerization was carried out using the same catalyst as in example 1 under the same conditions as in example 1. However, the amount of ethylene in the first reactor was set to 38 kg/h and the amount of hydrogen was set to 19.3 g/h. In the second reactor, an amount of 34 kg/h of ethylene without additional 1-butene was fed in and a hydrogen volume concentration in the gas space of 18% was set. In the third reactor, the amount of ethylene was set to 28 kg/h, while the amount of hydrogen was reduced to zero and the amount of 1-butene was increased to 451 g/h.

The suspension medium is separated off from the polymer suspension leaving the third reactor and the powder is dried and passed to pelletization.

The multimodal polyethylene molding composition produced in example 2 has the following viscosity numbers and proportions w_{A}, w_{B} and w_{C} of polymer A, B and C reported in Table 2 below.

The abbreviations for the physical properties in Table 2 have the same meanings as in Table 1 above.

**Table 2A - Values measured on the powder**

| **Example** | **(2)** |
|---|---|
| W_{A} [% by weight] | 38 |
| W_{C} [% by weight] | 34 |
| W_{C} [% by weight] | 28 |
| VN₁ [ml/g] | 173 |
| VN₂ [ml/g] | 230 |
| VNₜₒₜ [ml/g] | 438 |
| MI_{1.6} (powder) | 5.3 g/10 min |

**Table 2B - Values measured on the pellets**

| | |
|---|---|
| VN (pellets) [ml/g] | 425 |
| MFR_{21.5} | 4.0 g/10 min |
| MFR₅ | 0.18 g/10 min |
| FRR_{21.6/5} | 23 |
| SD | 194% |
| FNCT (4 MPa/80°C) | 17 h |
| NIT_{ISO} -30°C | 37 kJ/m² |

The surprising advantage of the invention is shown particularly clearly by comparison with the results from example 1. In the comparative example, only a small deviation in the ratio of the fractions A, B and C having different molar masses was set. In addition, although the total amount of comonomer was maintained at 451 g/h, all of the comonomer was passed to the third polymerization step. Although this change resulted in the processability of the polymer, its degree of swelling and its notched impact toughness being maintained, the stress cracking resistance (FNCT) was reduced significantly, which was particularly surprising. Obviously, the overall picture of all physical properties desired for use of the molding composition for fuel tanks in motor vehicles can only be set reliably in a quite narrow range of choices.

## Claims

1. A polyethylene molding composition which has a multimodal molar mass distribution, a density at a temperature of 23°C in the range from 0.948 to 0.953 g/cm³ and an MFI_{190/21.6} in the range from 4.5 to 6 dg/min, preferably from 4.8 to 5.6 dg/min, and comprises from 40 to 50% by weight of a first, low molecular weight ethylene homopolymer A, from 35 to 45% by weight of a second, high molecular weight copolymer B of ethylene and from 0.4 to 0.8% by weight of another olefin having from 4 to 8 carbon atoms and from 10 to 25% by weight of a third, ultrahigh molecular weight ethylene copolymer C, with all percentages being based on the total weight of the molding compositions, wherein the viscosity number VN₁ of the ethylene homopolymer A is in the range from 160 to 200 ml/g and the viscosity number VN₂ of the mixture of polymer A plus polymer B is in the range from 250 to 300 ml/g.

2. The polyethylene molding composition according to claim 1, where the ultrahigh molecular weight ethylene copolymer C comprises comonomers in an amount of from 1.5 to 3.0% by weight, based on the weight of copolymer C.

3. The polyethylene molding composition according to claim 1 or 2 which comprises 1-butene, 1-pentene, 1-hexene, 1-octene, 4-methyl-1-pentene or a mixture thereof as comonomer.

4. The polyethylene molding composition according to one or more of claims 1 to 3 which has a viscosity number VNtot measured in accordance with ISO 1628-3 in decalin at a temperature of 135°C in the range from 400 to 480 ml/g, preferably from 420 to 460 ml/g.

5. The polyethylene molding composition according to one or more of claims 1 to 4 which has a degree of swelling in the range from 170 to 210% and has a stress cracking resistance (FNCT) in the range from 30 to 60 h.

6. A process for producing a polyethylene molding composition according to one or more of claims 1 to 5, in which the polymerization of the monomers is carried out in suspension at temperatures in the range from 60 to 90°C, a pressure in the range from 2 to 10 bar and in the presence of a highly active Ziegler catalyst which is composed of a transition metal compound and an organoaluminum compound, wherein the polymerization is carried out in three steps and the molar mass of the polyethylene prepared in each step is in each case regulated by means of hydrogen.

7. The process according to claim 6, wherein the hydrogen concentration in the first polymerization step is set so that the viscosity number VN₁ of the low molecular weight polyethylene A is in the range from 160 to 200 ml/g.

8. The process according to claim 6 or 7, wherein the hydrogen concentration in the second polymerization step is set so that the viscosity number VN₂ of the mixture of polymer A plus polymer B is in the range from 250 to 300 ml/g.

9. The process according to any of claims 6 to 8, wherein the hydrogen concentration in the third polymerization step is set so that the viscosity number VN₃ of the mixture of polymer A, polymer B plus polymer C is in the range from 400 to 480 ml/g, in particular from 420 to 460 ml/g.

10. The use of a polyethylene molding composition according to one or more of claims 1 to 5 for producing fuel containers having a capacity in the range from 20 to 200 l, wherein the polyethylene molding composition is firstly plasticized in an extruder at temperatures in the range from 200 to 250°C and then extruded through a die to produce a blank which is then three-dimensionally shaped in the hot state and then cooled.

11. A fuel container for motor vehicles produced from a polyethylene molding composition according to one or more of claims 1 to 4 by extrusion and subsequent thermoforming, wherein the fuel container has a wall thickness in the range from 0.8 to 15 mm.

## Patentansprüche

1. Polyethylenformmasse, die eine multimodale Molekulargewichtsverteilung, eine Dichte bei einer Temperatur von 23 °C im Bereich von 0,948 bis 0,953 g/cm³ und einen MFI_{190/21,6} im Bereich von 4,5 bis 6 dg/min, vorzugsweise von 4,8 bis 5,6 dg/min aufweist und 40 bis 50 Gew.% eines ersten Ethylenhomopolymers A mit niedrigem Molekulargewicht, von 35 bis 45 Gew.% eines zweiten Copolymers B mit hohem Molekulargewicht von Ethylen und von 0,4 bis 0,8 Gew.% eines anderen Olefins mit 4 bis 8 Kohlenstoffatomen und von 10 bis 25 Gew.% eines dritten Ethylencopolymers C mit ultrahohem Molekulargewicht umfasst, wobei sich alle Prozentsätze auf das Gesamtgewicht der Formmassen beziehen, wobei die Viskositätszahl VN₁ des Ethylenhomopolymers A im Bereich von 160 bis 200 ml/g liegt und die Viskositätszahl VN₂ der Mischung aus Polymer A plus Polymer B im Bereich von 250 bis 300 ml/g liegt.

2. Polyethylenformmasse nach Anspruch 1, wobei das Ethylencopolymer C mit ultrahohem Molekulargewicht Comonomere in einer Menge von 1,5 bis 3,0 Gew.% umfasst, bezogen auf das Gewicht von Copolymer C.

3. Polyethylenformmasse nach Anspruch 1 oder 2, die 1-Buten, 1-Penten, 1-Hexen, 1-Octen, 4-Methyl-1-penten oder eine Mischung davon als Comonomer umfasst.

4. Polyethylenformmasse nach einem oder mehreren der Ansprüche 1 bis 3, die eine Viskositätszahl VNₜₒₜ, gemessen gemäß ISO 1628-3 in Decalin bei einer Temperatur von 135 °C, im Bereich von 400 bis 480 ml/g, vorzugsweise 420 bis 460 ml/g aufweist.

5. Polyethylenformmasse nach einem oder mehreren der Ansprüche 1 bis 4, die einen Quellgrad im Bereich von 170 bis 210 % und eine Spannungsrissbeständigkeit (FNCT) im Bereich von 30 bis 60 h aufweist.

6. Verfahren zur Herstellung einer Polyethylenformmasse nach einem oder mehreren der Ansprüche 1 bis 5, wobei die Polymerisation der Monomere in Suspension bei Temperaturen im Bereich von 60 bis 90 °C, einem Druck im Bereich von 2 bis 10 bar und in Gegenwart eines hochaktiven Ziegler-Katalysators durchgeführt wird, der aus einer Übergangsmetallverbindung und einer Organoaluminiumverbindung zusammengesetzt ist, wobei die Polymerisation in drei Stufen durchgeführt wird und das Molekulargewicht des in jeder Stufe hergestellten Polyethylens in jedem Fall mittels Wasserstoff reguliert wird.

7. Verfahren nach Anspruch 6, wobei die Wasserstoffkonzentration in der ersten Polymerisationsstufe so festgelegt wird, dass die Viskositätszahl VN₁ des Polyethylens A mit niedrigem Molekulargewicht im Bereich von 160 bis 200 ml/g liegt.

8. Verfahren nach Anspruch 6 oder 7, wobei die Wasserstoffkonzentration in der zweiten Polymerisationsstufe so festgelegt wird, dass die Viskositätszahl VN₂ der Mischung von Polymer A plus Polymer B im Bereich von 250 bis 300 ml/g liegt.

9. Verfahren nach einem der Ansprüche 6 bis 8, wobei die Wasserstoffkonzentration in der dritten Polymerisationsstufe so festgelegt wird, dass die Viskositätszahl VN₃ der Mischung von Polymer A, Polymer B plus Polymer C im Bereich von 400 bis 480 ml/g, insbesondere von 420 bis 460 ml/g liegt.

10. Verwendung einer Polyethylenformmasse nach einem der Ansprüche 1 bis 5 zur Herstellung von Brennstoff- bzw. Kraftstoffbehältern mit einer Kapazität im Bereich von 20 bis 200 l, wobei die Polyethylenformmasse zuerst in einem Extruder bei Temperaturen im Bereich von 200 bis 250 °C plastifiziert und dann durch eine Düse extrudiert wird, um einen Rohling zu produzieren, der dann im warmen Zustand dreidimensional geformt und danach gekühlt wird.

11. Brennstoff- bzw. Kraftstoffbehälter für Motorfahrzeuge, der aus einer Polyethylenformmasse nach einem oder mehreren der Ansprüche 1 bis 4 durch Extrusion und anschließendes Thermoformen hergestellt worden ist, wobei der Kraftstoffbehälter eine Wanddicke im Bereich von 0,8 bis 15 mm aufweist.

## Revendications

1. Composition de moulage à base de polyéthylène, qui présente une distribution multimodale des masses molaires, une densité, à une température de 23°C, dans la plage de 0,948 à 0,953 g/cm³ et un MFI_{190/21,6} dans la plage de 4,5 à 6 dg/min, de préférence de 4,8 à 5,6 dg/min, et qui comprend 40 à 50% en poids d'un premier homopolymère A d'éthylène de bas poids moléculaire, 35 à 45% en poids d'un deuxième copolymère B d'éthylène de haut poids moléculaire et de 0,4 à 0,8% en poids d'une autre oléfine comprenant 4 à 8 atomes de carbone et 10 à 25% en poids d'un troisième copolymère C d'éthylène de poids moléculaire ultrahaut, tous les pourcentages étant à base du poids total des compositions de moulage, l'indice de viscosité IV₁ de l'homopolymère A d'éthylène étant situé dans la plage de 160 à 200 ml/g et l'indice de viscosité IV₂ du mélange polymère A plus polymère B étant situé dans la plage de 250 à 300 ml/g.

2. Composition de moulage à base de polyéthylène selon la revendication 1, le copolymère C d'éthylène de poids moléculaire ultrahaut comprenant des comonomères en une quantité de 1,5 à 3,0% en poids, sur base du poids du copolymère C.

3. Composition de moulage à base de polyéthylène selon la revendication 1 ou 2, qui comprend, comme comonomère, le 1-butène, le 1-pentène, le 1-hexène, le 1-octène, le 4-méthyl-1-pentène ou un mélange de ceux-ci.

4. Composition de moulage à base de polyéthylène selon l'une ou plusieurs des revendications 1 à 3, qui présente un indice de viscosité IVₜₒₜ, mesuré conformément à la norme ISO 1628-3 dans de la décaline à une température de 135°C, dans la plage de 400 à 480 ml/g, de préférence de 420 à 460 ml/g.

5. Composition de moulage à base de polyéthylène selon l'une ou plusieurs des revendications 1 à 4, qui présente un degré de gonflement dans la plage de 170 à 210% et qui présente une résistance à la fissuration sous contrainte (FNCT) dans la plage de 30 à 60 h.

6. Procédé pour produire une composition de moulage à base de polyéthylène selon l'une ou plusieurs des revendications 1 à 5, dans lequel la polymérisation des monomères est effectuée en suspension à des températures dans la plage de 60 à 90°C, à une pression dans la plage de 2 à 10 bars et en présence d'un catalyseur de Ziegler hautement actif constitué d'un composé de métal de transition et d'un composé organique de l'aluminium, la polymérisation étant effectuée en trois étapes et la masse molaire du polyéthylène préparé dans chaque étape étant régulée dans chaque cas au moyen d'hydrogène.

7. Procédé selon la revendication 6, la concentration en hydrogène dans la première étape de polymérisation étant réglée de manière telle que l'indice de viscosité IV₁ du polyéthylène A de bas poids moléculaire se situe dans la plage de 160 à 200 ml/g.

8. Procédé selon la revendication 6 ou 7, la concentration en hydrogène dans la deuxième étape de polymérisation étant réglée de manière telle que l'indice de viscosité IV₂ du mélange polymère A plus polymère B se situe dans la plage de 250 à 300 ml/g.

9. Procédé selon l'une quelconque des revendications 6 à 8, la concentration en hydrogène dans la troisième étape de polymérisation étant réglée de manière telle que l'indice de viscosité VN₃ du mélange polymère A, polymère B plus polymère C se situe dans la plage de 400 à 480 ml/g, en particulier de 420 à 460 ml/g.

10. Utilisation d'une composition de moulage à base de polyéthylène selon l'une ou plusieurs des revendications 1 à 5 pour produire des récipients à carburant présentant une capacité dans la plage de 20 à 200 l, la composition de moulage à base de polyéthylène étant d'abord plastifiée dans une extrudeuse à des températures dans la plage de 200 à 250°C, puis extrudée à travers une filière pour produire une ébauche qui est ensuite façonnée à chaud en trois dimensions et ensuite refroidie.

11. Récipient à carburant pour véhicules à moteur, produit à partir d'une composition de moulage à base de polyéthylène selon l'une ou plusieurs des revendications 1 à 4 par extrusion et thermoformage consécutif, le récipient à carburant présentant une épaisseur de paroi dans la plage de 0,8 à 15 mm.
